# EUROPÄISCHE PATENTSCHRIFT

(11) **EP 2 664 659 B1**
(45) Veröffentlichungstag und Bekanntmachung des Hinweises auf die Patenterteilung: **25.09.2019**
(21) Anmeldenummer: 13167633.0
(22) Anmeldetag: 14.05.2013
(51) Int. Cl.: C09D 183/06

(54) **Antifog-Beschichtung**
Antifog coating
Revêtement antibuée

(30) Priorität: 15.05.2012 DE 102012009691
(43) Veröffentlichungstag der Anmeldung: 20.11.2013
(73) Patentinhaber: Carl Zeiss Vision International GmbH, 73430 Aalen (DE)
(72) Erfinder: Glöge, Thomas, 73434 Aalen (DE); Hugenberg, Norbert, 73434 Aalen (DE); Von Blanckenhagen, Bernhard, 73433 Aalen (DE); Kraus, Stefan, 73434 Aalen (DE)
(74) Vertreter: Haggenmüller, Christian

(56) Entgegenhaltungen:
- EP-A1- 0 620 255
- EP-A1- 1 862 514
- WO-A1-2009/144999
- WO-A1-2012/013739
- FR-A1- 2 954 832
- JP-A- 2000 104 046
- US-A- 3 865 619
- US-A- 4 026 826
- US-A- 5 958 598
- US-A- 6 132 861
- US-A1- 2006 046 046
- US-A1- 2008 036 964
- US-A1- 2011 317 239

## Beschreibung

Die vorliegende Erfindung betrifft ein Verfahren zur Herstellung einer Antifog-Beschichtung auf einer Optikkomponente.

Heutige Brillengläser (Korrektionsbrillen, Sonnenbrillen, Ski/Sport Brillen, Schutzbrillen) beschlagen unter ungünstigen Bedingungen. Diese Bedingungen sind zum einen der Übergang von einer kalten Umgebung in eine warme Umgebung (z.B. man kommt im Winter bei kalten Temperaturen von draußen in die Wohnung, oder man verlässt in einem Land mit tropischen Klimabedingungen ein klimatisiertes Gebäude), zum anderen wenn das Brillenglas mit einer Quelle warmer/heisser Luft mit hoher relativer Luftfeuchtigkeit in Kontakt kommt. Typischerweise muss der Brillenträger nach dem Beschlagen seine Brille abnehmen und warten bis der Beschlag verschwindet oder er muss den Beschlag mit einem Tuch abwischen.

Das Problem des Beschlagens betrifft allgemein Optikkomponenten.
Untersucht man den Beschlag mit einem Lichtmikroskop, stellt man fest, dass der Beschlag aus kleinen Wassertröpfchen besteht. Diese haben einen Durchmesser von typischerweise 20µm. Der Oberflächenbelegungsgrad dieser Tröpfchen ist in etwa 50% , was auch kinetische theoretische Modelle vorhersagen. Dass ein beschlagenes Brillenglas milchig erscheint, liegt daran, dass die Lichtausbreitung durch die Tröpfchen gestört wird.

Mit der Reduzierung der Transmission geht gleichzeitig eine Erhöhung des Streulichtanteils einher, die das Glas milchig erscheinen lassen. Ein niedriger Kontaktwinkel der Wassertröpfchen vorteilhaft, die Transmission ist dann hoch und der Streulichtanteil niedrig.

Da sich die Kondensation von Wasser unter den Bedingungen, bei denen Brillengläser beschlagen, nicht verhindern lässt, ist ein Lösungsansatz, die Oberfläche so zu behandeln, dass die Wassertropfen einen kleinen Kontaktwinkel mit der Oberfläche ausbilden.

Es gibt Ansätze, wie dies für optische Gläser wie z.B. Brillengläser umgesetzt werden kann. Typsicherweise sind dies Sprays oder mit Flüssigkeiten getränkte Tücher. Die zum Einsatz kommenden Flüssigkeiten sind dabei aus der Gruppe der hydrophilen Tenside. Es gibt eine Vielzahl solcher Produkte am Markt. Diesen Produkten ist gemeinsam, dass der Anti-Beschlag-Effekt bzw. Antifog-Effekt nicht dauerhaft ist, sonder die Lösung regelmäßig auf die Oberfläche aufgetragen werden muss. Ebenso gibt es Ansätze, die mit Hilfe physikalischer Effekte die Ausbildung von Wassertropfen verhindern, beispielsweise Belüftungssysteme in Skibrillen.

Des Weiteren gibt es Lösungen für optische Gläser wie Brillengläser, die mit einer Hart-Beschichtung versehen sind und die einen dauerhaften anti-Beschlag-Effekt (Antifog-Effekt) gewährleisten.

Heutige hochwertige optische Gläser wie z.B. hochwertige Brillengläser sind im Regelfall mit einer anti-Reflex (AR) Beschichtung versehen. Diese reduziert ungewünschte, irritierende Reflexe.

Es ist vorteilhaft, wenn es gelingt, die Oberfläche von mit AR-Schichten versehenen Optikkomponenten wie z.B. Brillengläsern so zu modifizieren, dass ein dauerhafter anti-Beschlag-Effekt bzw. Antifog-Effekt erzielt wird, so dass eine regelmäßige Nachbehandlung, z.B. mit einem Spray, entfällt. Ein besonderes Augenmerk ist dabei darauf zu legen, dass die optische Wirkung der anti-Reflexionsschicht erhalten bleibt.

Die Dokumente EP 1 862 514 A1 und WO 2009/144999 A1 offenbaren ein Verfahren, wobei eine Mischung eines Epoxysilanhaftvermittlers und eines Polyacrylats, das Hydroxygruppen aufweist, auf die Oberfläche einer Optikkomponente angebracht wird.

Bei der Optikkomponente kann es sich z.B. um optische Gläser aus Glas oder Kunststoff oder auch um eine Strahlteilerkomponente handeln. Beispielhaft können in diesem Zusammenhang Brillengläser, Ferngläser, Abdeckscheiben bzw. Abdeckgläser oder auch Linsen wie Okkularlinsen, Kameralinsen oder Frontlinsen genannt werden.

In einer bevorzugten Ausführungsform weist die Optikkomponente eine Antireflektionsschicht (AR-Schicht) auf. Die Antifog-Beschichtung kann direkt auf der AR-Schicht angebracht sein.

Die Schichtdicke der Antifog-Beschichtung kann über einen breiten Bereich variiert werden, z.B. von einer monomolekularen (d.h. einlagigen) Schicht bis zu einer mehrlagigen Schicht mit einer Schichtdicke von bis zu 150 nm. Sofern die Optikkomponente eine Antireflektionsschicht (AR-Schicht) aufweist, wird die Schichtdicke der Antifog-Beschichtung bevorzugt so gewählt, dass die Funktion der AR-Schicht nicht beeinträchtigt wird. Liegt die Antifog-Beschichtung auf einer AR-Schicht vor, so liegt die Schichtdicke der Antifog-Beschichtung bevorzugt im Bereich von einlagig bis 100 nm, bevorzugter im Bereich von 10 nm bis 20 nm.

Gemäß eines Aspekts betrifft die vorliegende Erfindung eine Optikkomponente mit einer quervernetzten Antifog-Beschichtung, erhältlich durch kovalente Anbindung eines Silanderivats der Formel (2) an die Oberfläche der Optikkomponente und Quervernetzung benachbarter Moleküle:

RₒXₘSiBₙ (2)

wobei
m=1-3, n=1-2 und o=0-1, unter der Voraussetzung, dass m+n+o=4,
der Rest X ausgewählt wird aus Halogen oder C₁₋₄-Alkoxy, wobei für m=2-3 die einzelnen Reste X gleich oder unterschiedlich sein können,
der Rest R C₁₋₄Alkyl ist,
der Rest B die Struktur -B1-B2 aufweist, in der B2 eine endständige hydrophile Gruppe ist, die mit mindestens einer hydrophilen Gruppe eines benachbarten Moleküls der Antifog-Schicht quervernetzt ist, und -B1- entweder eine Spacer-Gruppe, die die hydrophile Gruppe B2 mit dem Si-Atom verbindet, oder eine kovalente Bindung darstellt,
wobei die endständige hydrophile Gruppe -B2 Poly(meth)acrylat ist,
wobei für n=2 die einzelnen Reste B gleich oder unterschiedlich sein können.

Die kovalente Anbindung der Verbindung der Formel (2) an die Oberfläche der Optikkomponente erfolgt, indem mindestens eine der reaktiven, hydrolysierbaren - Si-X-Gruppen mit einer geeigneten reaktiven Oberflächengruppe (z.B. einer -OH Gruppe) unter Ausbildung von -Si-O- reagiert. Diese Art der Oberflächenanbindung einer Siliziumverbindung, die eine reaktive, hydrolysierbare Gruppe aufweist, ist dem Fachmann grundsätzlich bekannt.
Bevorzugt handelt es sich bei X um Methoxy, Ethoxy oder Cl.

Im Rahmen der vorliegenden Erfindung wurde festgestellt, dass durch die Auswahl geeigneter hydrophiler Gruppen in dem Silanderivat der Formel (2) und der Vernetzung benachbarter Moleküle in der Antifog-Beschichtung einerseits die -Si-O-Bindung, über die die Moleküle der Antifog-Beschichtung an die Oberfläche der Optikkomponente gebunden sind, besser vor Wasser abgeschirmt wird und die Hydrolysestabilität der Antifog-Beschichtung erhöht werden kann und außerdem der Kontaktwinkel des Wassers zur Antifog-Beschichtung gering gehalten wird.
Im Rahmen der vorliegenden Erfindung hat sich auch gezeigt, dass die erfindungsgemäße quervernetzte Antifog die unerwünschte Adsorption der hydrophilen Gruppe -B2 auf der Oberfläche der Optikkomponente deutlich reduziert, was wiederum zu einer erhöhten Belegungsdichte der Moleküle der Antifogschicht auf der Oberfläche der Optikkomponente führt.
Wie oben ausgeführt, ist die endständige hydrophile Gruppe -B2 Poly(meth)acrylat.

Enthält die hydrophile Gruppe -B2 ein Poly(meth)acrylat, so kann dieses ausschließlich aus identischen Monomereinheiten wie CH₂=C(CH₃)COOC₁₋₄-Alkyl (z.B. CH₂=C(CH₃)COOCH₃), CH₂=C(H)COOC₁₋₄-Alkyl (z.B. CH₂=C(H)COOCH₃),

Hydroxyethylmethacrylat (HEMA), 2-Acrylamido-2-methylpropansulfonsäure (AMPS), Trimethylolpropantriacrylat oder Pentaerythritoltetraacrylat oder aus einem Gemisch dieser Monomereinheiten aufgebaut sein und kann optional noch weitere zusätzliche Comonomereinheiten enthalten. Das Poly(meth)acrylat als hydrophile Gruppe B2 kann beispielsweise über eine Estergruppe mit der Spacer-Gruppe -B1- oder dem Si-Atom verknüpft sein.

Im Rahmen der vorliegenden Erfindung kann die Spacer-Gruppe, sofern sie vorliegt, in breitem Umfang variiert werden. Als Spacer-Gruppe kommt beispielsweise eine Alkylen-Gruppe wie C₁₋₈Alkylen, bevorzugter C₁₋₃Alkylen in Frage.

Silanderivate der Formel (2) sind kommerziell erhältlich oder können über dem Fachmann bekannte Syntheseverfahren hergestellt werden.

Verfahren zur kovalenten Anbindung von Silanderivaten auf reaktiven Oberflächen sind dem Fachmann grundsätzlich bekannt. Gemäß einer Variante wird das Silanderivat in einem geeigneten Lösungsmittel mit der Oberfläche unter reaktiven Bedingungen in Kontakt gebracht. Alternativ kann das Silanderivat auch über die Gasphase mit der Oberfläche zur Reaktion gebracht werden.

Gemäß eines weiteren Aspekts betrifft die vorliegende Erfindung ein Verfahren zur Herstellung einer quervernetzten Antifog-Beschichtung auf einer Optikkomponente, umfassend die Bereitstellung der Optikkomponente und die kovalente Anbindung des Silanderivats der Formel (2) durch chemische Reaktion mit reaktiven Gruppen auf der Oberfläche der Optikkomponente, gefolgt von der Quervernetzung der hydrophilen Gruppen -B2 benachbarter Moleküle der Antifog-Beschichtung.

Geeignete Reaktionsbedingungen für die Quervernetzung benachbarter Moleküle mit geeigneten reaktiven Gruppen sind dem Fachmann bekannt. Erfolgt die Quervernetzung über eine radikalische Reaktion, können Radikalstarter wie z.B. Dichlordicyanochinon (DDQ) eingesetzt werden. Eine Quervernetzung kann bei bestimmten Gruppen auch unter Einwirkung von UV-Strahlung initiiert werden.

Bezüglich der Eigenschaften des Silanderivats der Formel (2) und der Optikkomponente kann auf die obigen Ausführungen verwiesen werden.

Gemäß eines weiteren Aspekts betrifft die vorliegende Erfindung die Verwendung des Silanderivats der Formel (2) zur Bereitstellung einer Antifog-Beschichtung auf einer Optikkomponente.

Im Rahmen der vorliegenden Erfindung ist es auch möglich, die quervernetzte Antifog-Beschichtung auf der Optikkomponente herzustellen, indem zunächst eine geeignete Precursor-Verbindung für das Silanderivat der Formel (2) auf der Oberfläche der Optikkomponente kovalent gebunden wird, wobei diese Precursor-Verbindung eine endständige Gruppe mit geeigneter Funktionalität aufweist und dadurch eine anschließende chemische Umsetzung mit geeigneten Reaktionspartnern zu dem Silanderivat der Formel (2) ermöglicht.

Gemäß eines weiteren Aspekts betrifft die vorliegende Erfindung daher ein Verfahren zur Herstellung einer quervernetzten Antifog-Beschichtung auf einer Optikkomponente, wobei zunächst eine Precursorverbindung der Formel (3) kovalent auf die Oberfläche der Optikkomponente gebunden wird:

RₒXₘSiCₙ (3)

wobei
m=1-3, n=1-2 und o=0-1, unter der Voraussetzung, dass m+n+o=4,
der Rest X ausgewählt wird aus Halogen oder C₁₋₄-Alkoxy, wobei für m=2-3 die einzelnen Reste X gleich oder unterschiedlich sein können,
der Rest R C₁₋₄Alkyl ist,
der Rest C die Struktur -C1-C2 aufweist, in der -C2 eine endständige Gruppe mit einer (Meth)acrylat-Funktionalität ist und -C1- entweder eine Spacer-Gruppe, die der oben beschriebenen Spacer-Gruppe -B1- entspricht, oder eine kovalente Bindung darstellt,
und die endständige Gruppe C2 mit (Meth)acrylat-Monomeren zu einer hydrophilen Poly(meth)acrylat-Gruppe umgesetzt wird, gefolgt von der Quervernetzung der hydrophilen Poly(meth)acrylat-Gruppen benachbarter Moleküle der Antifog-Beschichtung.

Als geeignete (Meth)acrylat-Monomere können beispielsweise CH₂=C(CH₃)COOC₁₋₄-Alkyl (z.B. CH₂=C(CH₃)COOCH₃), CH₂=C(H)COOC₁₋₄-Alkyl (z.B. CH₂=C(H)COOCH₃), Hydroxyethylmethacrylat (HEMA), 2-Acrylamido-2-methylpropansulfonsäure (AMPS), Trimethylolpropantriacrylat oder Pentaerythritoltetraacrylat oder deren Gemische genannt werden.

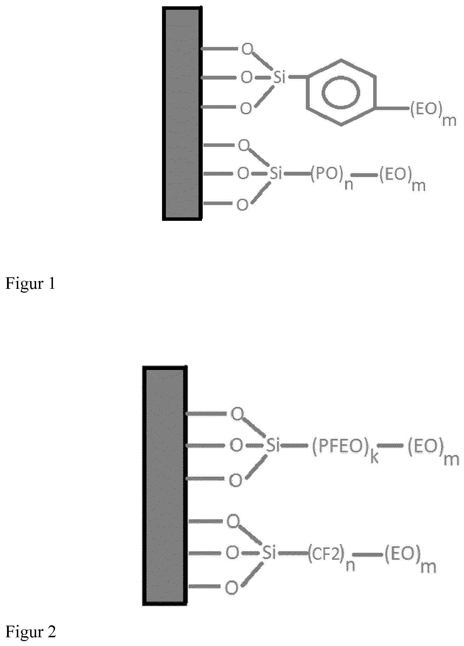

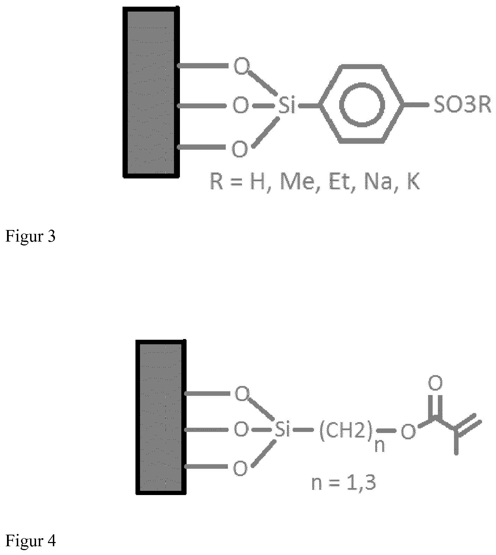

Figur 4 zeigt schematisch eine Oberfläche einer Optikkomponente, die mit einer Precursor-Verbindung (3) belegt wurde. Die endständige Gruppe der Precursor-Verbindung weist eine (Meth)Acrylat-Funktionalität auf, die die Umsetzung mit weiteren (Meth)Acrylat-Monomeren und somit den Aufbau einer hydrophilen Poly(meth)acrylat-Gruppe ermöglicht.

Die Erfindung wird durch die nachfolgenden Beispiele eingehender beschrieben.

### Beispiele

### Beispiel 1

In 490mL Toluol werden 9,98g 3-Methacryloxypropyl(trichlorsilan) gelöst. Ein Glas wird in dieser Lösung eine Stunde gelagert und dann an der Luft getrocknet. Im zweiten Schritt wird das gleiche Glas kurz in eine Lösung bestehend aus 5,0g 2-Hydroxyethylmethacrylat (HEMA), 1,0g Trimethylolpropantriacrylat (TMPTA) und 0,5g Diphenyl-(2,4,6-trimethylbenzoyl)phosphinoxid in 50mL Toluol getaucht und danach mit einer Panacol UV-D-1000-Lampe ausgehärtet.

### Beispiel 2

10,01g 3-Methacryloxypropyl(trichlorsilan) werden in 240mL Toluol gelöst und ein Glas mit Antireflexbeschichtung wird eine Stunde darin gelagert und danach an der Luft getrocknet. Im zweiten Schritt wird das gleiche Glas in eine Lösung bestehend aus 10,0g HEMA, 3,0g TMPTA und 0,5g Diphenyl-(2,4,6-trimethylbenzoyl)phosphin-oxid in 100mL Toluol getaucht und danach mit einer Panacol UV-D-1000-Lampe ausgehärtet.

In den Beispielen 1 und 2 wird zunächst eine Precursor-Verbindung mit einer Methacrylatfunktionalität kovalent auf der Substratoberfläche verankert. Anschließend erfolgt die Reaktion mit weiteren (Meth)acrylat-Monomeren, um endständige Poly(meth)acrylat-Gruppen auszubilden, und eine Quervernetzung benachbarter Moleküle.

Sowohl die in Beispiel 1 als auch die in Beispiel 2 hergestellte Beschichtung zeigt eine Antifog-Wirkung. Ein hoher Anteil des Monomers Hydroxyethylmethacrylat erhöht den hydrophilen Charakter der Beschichtung und damit auch die Antifog-Wirkung, während ein hoher Anteil des Monomers Trimethylolpropantriacrylat die Vernetzung in der Beschichtung erhöht und dadurch mechanische Eigenschaften verbessert.

## Patentansprüche

1. Verfahren zur Herstellung einer quervernetzten Antifog-Beschichtung auf einer Optikkomponente, umfassend die Bereitstellung der Optikkomponente und die kovalente Anbindung eines Silanderivats durch chemische Reaktion mit reaktiven Gruppen auf der Oberfläche der Optikkomponente, gefolgt von einer Quervernetzung;
wobei das Silanderivat ein Silanderivat der Formel (2) ist:
RₒXₘSiBₙ (2)
wobei
m=1-3, n=1-2 und o=0-1, unter der Voraussetzung, dass m+n+o=4, der Rest X ausgewählt wird aus Halogen oder C₁₋₄-Alkoxy, wobei für m=2-3 die einzelnen Reste X gleich oder unterschiedlich sein können, der Rest R C₁₋₄-Alkyl ist,
der Rest B die Struktur -B1-B2 aufweist, in der B2 eine endständige hydrophile Gruppe ist, die mit mindestens einer hydrophilen Gruppe eines benachbarten Moleküls der Antifog-Schicht quervernetzt ist, und -B1- entweder eine Spacer-Gruppe, die die hydrophile Gruppe B2 mit dem Si-Atom verbindet, oder eine kovalente Bindung darstellt,
wobei die endständige hydrophile Gruppe -B2 Poly(meth)acrylat ist, wobei für n=2 die einzelnen Reste B gleich oder unterschiedlich sein können; und
wobei die Quervernetzung zwischen benachbarten Molekülen der hydrophilen Gruppen -B2 der Antifog-Beschichtung erfolgt.

2. Verfahren gemäß Anspruch 1, wobei das Poly(meth)acrylat der endständigen hydrophilen Gruppe -B2 Monomereinheiten umfasst, die aus CH₂=C(CH₃)COOC₁₋₄-Alkyl, CH₂=C(H)COOC₁₋₄-Alkyl, Hydroxyethylmethacrylat, 2-Acrylamido-2-methylpropansulfonsäure, Trimethylolpropantriacrylat oder Pentaerythritoltetraacrylat oder deren Gemischen ausgewählt werden.

3. Verfahren gemäß Anspruch 1 oder 2, wobei die kovalente Anbindung der Verbindung der Formel (2) an die Oberfläche der Optikkomponente erfolgt, indem mindestens eine der reaktiven, hydrolysierbaren -Si-X-Gruppen mit einer geeigneten reaktiven Oberflächengruppe unter Ausbildung von -Si-O-reagiert.

4. Verfahren gemäß einem der vorhergehenden Ansprüche, wobei X ausgewählt wird aus der Gruppe bestehend aus Methoxy, Ethoxy oder Cl.

5. Verfahren gemäß einem der vorhergehenden Ansprüche, wobei die Spacer-Gruppe B1 eine Alkylen-Gruppe ist.

6. Verfahren gemäß Anspruch 5, wobei die Alkylen-Gruppe eine C₁₋₈-Alkylen- oder eine C₁₋₃-Alkylengruppe ist.

7. Verfahren gemäß einem der vorhergehenden Ansprüche, wobei die Optikkomponente eine Antireflektionsschicht umfasst und die Antifog-Beschichtung auf der Antireflektionsschicht aufgebracht ist, wobei die Antifog-Beschichtung bevorzugt eine Schichtdicke von 100 nm oder weniger aufweist.

8. Ein Verfahren zur Herstellung einer quervernetzten Antifog-Beschichtung auf einer Optikkomponente, wobei zunächst eine Precursorverbindung der Formel (3) kovalent auf die Oberfläche der Optikkomponente gebunden wird:
RₒXₘSiCn (3)
wobei
m=1-3, n=1-2 und o=0-1, unter der Voraussetzung, dass m+n+o=4,
der Rest X ausgewählt wird aus Halogen oder C₁₋₄-Alkoxy, wobei für m=2-3 die einzelnen Reste X gleich oder unterschiedlich sein können, der Rest R C₁₋₄-Alkyl ist,
der Rest C die Struktur -C1-C2 aufweist, in der -C2 eine endständige Gruppe mit einer (Meth)acrylat-Funktionalität ist und -C1- entweder eine Spacer-Gruppe oder eine kovalente Bindung darstellt,
und die endständige Gruppe -C2 mit (Meth)acrylat-Monomeren zu einer hydrophilen Poly(meth)acrylat-Gruppe umgesetzt wird, gefolgt von der Quervernetzung der hydrophilen Poly(meth)acrylat-Gruppen benachbarter Moleküle der Antifog-Beschichtung.

9. Verfahren gemäß Anspruch 8, wobei die (Meth)acrylat-Monomere ausgewählt werden aus der Gruppe bestehend CH₂=C(CH₃)COOC₁₋₄-Alkyl, CH₂=C(H)COOC₁₋₄-Alkyl, Hydroxyethylmethacrylat (HEMA), 2-Acrylamido-2-methylpropansulfonsäure (AMPS), Trimethylolpropantriacrylat, Pentaerythritoltetraacrylat und deren Gemische.

## Claims

1. Process for producing a crosslinked antifog coating on an optical component, comprising the provision of the optical component and the covalent binding of a silane derivative by chemical reaction with reactive groups on the surface of the optical component, followed by crosslinking;
wherein the silane derivative is a silane derivative of the formula (2):
RₒXₘSiBₙ (2)
wherein
m = 1-3, n = 1-2 and o = 0 - 1, under the condition that m + n + o = 4,
the radical X is selected from halogen or C₁₋₄-alkoxy, wherein where m = 2-3 the individual radicals X may be the same or different,
the radical R is C₁₋₄-alkyl,
the radical B has the structure -B1-B2, in which B2 is a terminal hydrophilic group which is crosslinked with at least one of a hydrophilic group of an adjacent molecule of the antifog layer, and -B1- is either a spacer group, which links the hydrophilic group B2 with the Si atom, or is a covalent bond,
wherein the terminal hydrophilic group -B2 is poly(meth)acrylate,
wherein where n = 2 the individual radicals B may be the same or different; and
wherein the crosslinking is effected between adjacent molecules of the hydrophilic groups -B2 of the antifog coating.

2. Process according to Claim 1, wherein the poly(meth)acrylate of the terminal hydrophilic group -B2 comprises monomer units selected from CH₂=C(CH₃)COOC₁₋₄-alkyl, CH₂=C(H)COOC₁₋₄-alkyl, hydroxyethylmethacrylate, 2-acrylamido-2-methylpropanesulfonic acid, trimethylolpropane triacrylate or pentaerythritol tetraacrylate or mixtures thereof.

3. Process according to Claim 1 or 2, wherein the compound of the formula (2) is covalently bound to the surface of the optical component by reacting at least one of the reactive hydrolysable -Si-X groups with a suitably reactive surface group to form -Si-O.

4. Process according to any of the preceding claims, wherein X is selected from the group consisting of methoxy, ethoxy or Cl.

5. Process according to any of the preceding claims, wherein the spacer group B1 is an alkylene group.

6. Process according to Claim 5, wherein the alkylene group is a C₁₋₈-alkylene or a C₁₋₃-alkylene group.

7. Process according to any of the preceding claims, wherein the optical component comprises an antireflective layer and the antifog coating is applied to the antireflective layer, wherein the antifog coating preferably has a layer thickness of 100 nm or less.

8. Process for producing a crosslinked antifog coating on an optical component, wherein firstly a precursor compound of the formula (3) is covalently bound to the surface of the optical component:
RₒXₘSiCₙ (3)
wherein
m = 1-3, n = 1-2 and o = 0 - 1, under the condition that m + n + o = 4,
the radical X is selected from halogen or C₁₋₄-alkoxy, wherein where m = 2-3 the individual radicals X may be the same or different,
the radical R is C₁₋₄-alkyl,
the radical C has the structure -C1-C2, in which + C2 is a terminal group having a (meth)acrylate functionality and -C1- is either a spacer group or a covalent bond,
and the terminal group -C2 is reacted with (meth)acrylate monomers to give a hydrophilic poly(meth)acrylate group, followed by crosslinking of the hydrophilic poly(meth)acrylate groups of adjacent molecules of the antifog coating.

9. Process according to Claim 8, wherein the (meth)acrylate monomers are selected from the group consisting of CH₂=C(CH₃)COOC₁₋₄-alkyl, CH₂=C(H)COOC₁₋₄-alkyl, hydroxyethylmethacrylate (HEMA), 2-acrylamido-2-methylpropanesulfonic acid (AMPS), trimethylolpropane triacrylate, pentaerythritol tetraacrylate and mixtures thereof.

## Revendications

1. Procédé de fabrication d'un revêtement antibuée réticulé sur un composant optique, comprenant la préparation du composant optique et la liaison covalente d'un dérivé de silane par réaction chimique avec des groupes réactifs sur la surface du composant optique, suivie par une réticulation ;
le dérivé de silane étant un dérivé de silane de formule (2) :
RₒXₘSiBₙ (2)
dans laquelle
m = 1 à 3, n = 1 à 2 et o = 0 à 1, à condition que m+n+o = 4,
le radical X est choisi parmi halogène ou alcoxy en C₁₋₄ ; pour m = 2 à 3, les radicaux X individuels pouvant être identiques ou différents,
le radical R représente alkyle en C₁₋₄,
le radical B présente la structure -B1-B2, dans laquelle B2 est un groupe hydrophile terminal, qui est réticulé avec au moins un groupe hydrophile d'une molécule voisine de la couche antibuée, et -B1- représente un groupe espaceur, qui relie le groupe hydrophile B2 avec l'atome Si, ou une liaison covalente, le groupe hydrophile terminal -B2 étant un poly(méth)acrylate ; pour n = 2, les radicaux B individuels pouvant être identiques ou différents ; et
la réticulation ayant lieu entre des molécules voisines des groupes hydrophiles -B2 du revêtement antibuée.

2. Procédé selon la revendication 1, dans lequel le poly(méth)acrylate du groupe hydrophile terminal -B2 comprend des unités monomères qui sont choisies parmi CH₂=C(CH₃)COO-alkyle en C₁₋₄, CH₂=C(H)COO-alkyle en C₁₋₄, méthacrylate d'hydroxyéthyle, acide 2-acrylamido-2-méthylpropanesulfonique, triacrylate de triméthylolpropane ou tétraacrylate de pentaérythritol ou leurs mélanges.

3. Procédé selon la revendication 1 ou 2, dans lequel la liaison covalente du composé de formule (2) à la surface du composant optique a lieu par réaction d'au moins un des groupes -Si-X hydrolysables réactifs avec un groupe de surface réactif approprié avec formation de -Si-O.

4. Procédé selon l'une quelconque des revendications précédentes, dans lequel X est choisi dans le groupe constitué par méthoxy, éthoxy ou Cl.

5. Procédé selon l'une quelconque des revendications précédentes, dans lequel le groupe espaceur B1 est un groupe alkylène.

6. Procédé selon la revendication 5, dans lequel le groupe alkylène est un groupe alkylène en C₁₋₈ ou alkylène en C₁₋₃.

7. Procédé selon l'une quelconque des revendications précédentes, dans lequel le composant optique comprend une couche antireflet et le revêtement antibuée est appliqué sur la couche antireflet, le revêtement antibuée présentant de préférence une épaisseur de couche de 100 nm ou moins.

8. Procédé de fabrication d'un revêtement antibuée réticulé sur un composant optique, selon lequel un composé précurseur de formule (3) est tout d'abord relié par une liaison covalente sur la surface du composant optique :
RₒXₘSiCₙ (3)
dans laquelle
m = 1 à 3, n = 1 à 2 et o = 0 à 1, à condition que m+n+o = 4,
le radical X est choisi parmi halogène ou alcoxy en C₁₋₄ ; pour m = 2 à 3, les radicaux X individuels pouvant être identiques ou différents,
le radical R représente alkyle en C₁₋₄,
le radical X présente la structure -C1-C2, dans laquelle -C2 est un groupe terminal comprenant une fonctionnalité (méth)acrylate, et -C1- représente un groupe espaceur ou une liaison covalente,
et le groupe terminal -C2 est mis en réaction avec des monomères de (méth)acrylate pour former un groupe poly(méth)acrylate hydrophile, suivi par la réticulation des groupes poly(méth)acrylate hydrophiles de molécules voisines du revêtement antibuée.

9. Procédé selon la revendication 8, dans lequel les monomères de (méth)acrylate sont choisis dans le groupe constitué par CH₂=C(CH₃)COO-alkyle en C₁₋₄, CH₂=C(H)COO-alkyle en C₁₋₄, méthacrylate d'hydroxyéthyle (HEMA), acide 2-acrylamido-2-méthylpropanesulfonique (AMPS), triacrylate de triméthylolpropane, tétraacrylate de pentaérythritol et leurs mélanges.
